# FASCICULE DE BREVET EUROPEEN

(11) **EP 4 560 739 B1**
(45) Date de publication et mention de la délivrance du brevet: **02.09.2026**
(21) Numéro de dépôt: 24214686.8
(22) Date de dépôt: 22.11.2024
(51) Int. Cl.: H01M 8/0247, H01M 8/04537, H01M 8/241

(54) **EMPILEMENT POUR PILE À COMBUSTIBLE ET PROCÉDÉ DE FABRICATION D'UNE TELLE PILE**
BRENNSTOFFZELLENSTAPEL UND VERFAHREN ZUR HERSTELLUNG EINES SOLCHEN
FUEL CELL STACK AND METHOD FOR MANUFACTURING SAME

(30) Priorité: 27.11.2023 FR 2313075
(43) Date de publication de la demande: 28.05.2025
(73) Titulaire: Commissariat à l'Energie Atomique et aux Energies Alternatives, 75015 Paris (FR)
(72) Inventeur: MORIN, Benoît, 38054 GRENOBLE Cedex 09 (FR); POIROT-CROUVEZIER, Jean-Philippe, 38054 GRENOBLE Cedex 09 (FR); ROUILLON, Ludovic, 38054 GRENOBLE Cedex 09 (FR)
(74) Mandataire: Hautier IP

(56) Documents cités:
- EP-A1- 2 562 863
- WO-A1-2022/122631
- WO-A1-2023/020808

## Description

### DOMAINE TECHNIQUE

La présente invention concerne les piles à combustible, en particulier la fabrication d'une telle pile.

### ETAT DE LA TECHNIQUE

De manière générale, une pile à combustible comporte un empilement, habituellement désigné « stack », de cellules. Les cellules de l'empilement comprennent une membrane située entre deux plaques métalliques, dites plaques bipolaires. Une plaque bipolaire est commune à deux cellules consécutives de l'empilement. A chacune de ses extrémités, l'empilement comprend également une cellule, dite d'extrémité, située entre une plaque métallique monopolaire d'extrémité, et une plaque bipolaire. La membrane comprend une électrode positive et une négative (anode et cathode) présentant un potentiel électrique lors du fonctionnement de la pile. La membrane est également appelée AME (c'est-à-dire « Assemblage Membrane Electrode »).

La prise de mesure des tensions des cellules au sein d'un empilement, est généralement effectuée par l'insertion de fiches mâles ou femelles dans la plaque bipolaire qui possède des orifices complémentaires des fiches. On peut citer par exemple, la demande de brevet français FR2887690 qui divulgue une plaque bipolaire comprenant un logement creux destiné à recevoir un collecteur. Par exemple, certains dispositifs utilisent des fiches mâles qui sont généralement regroupées en petit groupe, c'est-à-dire entre deux et vingt fiches. Un nombre élevé facilite le maintien mécanique des fiches dans leurs logements formant des orifices femelles, en revanche un nombre élevé gêne la mise en place des fiches et peut poser des problèmes de tolérance mécanique si l'espacement effectif entre deux cellules du stack, appelé également « pas » de cellule, diffère de l'espacement moyen. De manière générale, le pas d'une cellule est la somme des épaisseurs ou hauteurs, mesurées dans la zone active de la cellule, d'une plaque bipolaire et de la membrane. Le pas peut être autour de 1 mm.

L'ensemble des prises de mesure est généralement appelé CVP (« Cell-Voltage Pick-up » en langue anglaise, c'est-à-dire prise de tension cellulaire). Le CVP est l'organe qui relie le stack à un organe de mesure qui réalise les mesures de tension à l'aide de composants électroniques, l'organe de mesure est appelé CVM (acronyme de « Cell Voltage Monitoring » en langue anglaise, c'est-à-dire surveillance de la tension cellulaire).

Il existe différents types de CVP. On peut citer, par exemple, la demande internationale WO202286864 qui divulgue des connecteurs qui viennent se coupler électriquement sur les plaques bipolaires à l'aide de languettes qui pincent les bords de la plaque bipolaire. Dans ce cas le connecteur est une fiche femelle et les CVP comprend des fiches mâles. Mais ce système est relativement encombrant puisqu'une isolation électrique doit être introduite sur les fiches femelles, augmentant ainsi le pas minimal de mesure entre deux fiches mâles du CVP.

Il existe également des piles à combustible pour lesquelles, des logements sont formés au bord des plaques bipolaires et forment des prises femelles configurées pour recevoir des fiches mâles du CVP.

Mais la mise en place des fiches mâle peut être délicate et pourrait être incompatible avec une industrialisation puisqu'il s'agit d'insérer les fiches dans un logement dont la plus grande dimension est inférieure aux pas des cellules de la pile. Par ailleurs, les déformations et tolérances de fabrication des composants d'un stack complet génèrent généralement un pas de cellules variable, par exemple de +/- 100 µm et les tolérances de centrage, de fabrication ne permettent pas d'avoir un alignement parfait selon la direction d'empilement des cellules, et on peut obtenir un décalage latéral de +/-100-200 µm entre les logements formés par les orifices femelle.

Aux tolérances de fabrication précédentes ; s'ajoute un désalignement généré par l'empilement des cellules et le manque de rigidité des composants structurels d'un stack.

Il en est de même pour la fabrication des CVP, qui possèdent également de larges tolérances dans la conception du fait de la souplesse nécessaire aux fiches et de leur longueur.

Il en résulte que lorsque l'on vient présenter un CVP possédant plusieurs fiches devant un groupe de cellule, les fiches s'insèrent fréquemment dans « le mauvais logement », suivant trois cas de figure. Selon un premier cas, la fiche s'insère entre une plaque bipolaire et une AME au lieu de s'insérer dans le logement de la plaque bipolaire prévu à cet effet. Le contact électrique est alors mauvais et il existe un risque de court-circuit si la fiche endommage l'AME réalisant l'isolation électrique. Selon un deuxième cas, deux fiches successives s'insèrent dans deux logements différents de la même plaque bipolaire. La tension mesurée entre les deux fiches en question sera alors nulle. Selon un troisième cas, une plaque bipolaire n'est prise par aucune fiche. La cellule en question n'est pas monitorée et la mesure de la cellule suivante indiquera la somme de la tension de la cellule non mesurée avec celle de la cellule suivante.

En pratique, ces trois cas se rencontrent bien souvent de manière combinée pour une même pile. Dans les deux derniers cas, le fonctionnement de la pile à combustible n'est pas possible sans ajout d'artefacts de pilotage (tels que l'ignorance des cellules concernées). Dans ce cas, un risque de mauvais fonctionnement est encouru pour la pile à combustible.

Il existe donc un besoin pour faciliter l'insertion d'un connecteur électrique pour la prise de mesure, en particulier des tensions, des cellules d'une pile à combustible.

### RESUME

Un objet de l'invention consiste à pallier ces inconvénients, et plus particulièrement à fournir des moyens pour faciliter l'insertion de plusieurs connecteurs d'un ensemble de prises de mesure CVP.

Les autres objets, caractéristiques et avantages de la présente invention apparaîtront à l'examen de la description suivante et des dessins d'accompagnement.

Selon un aspect de l'invention, il est proposé un empilement pour pile à combustible, l'empilement comportant une pluralité de cellules disposées successivement selon une direction, dite d'empilement, chaque cellule comprenant :
- un assemblage comprenant deux électrodes et une membrane formant un électrolyte, la membrane étant placée entre les deux électrodes ; et
- deux plaques bipolaires enserrant l'assemblage, chaque plaque bipolaire d'une cellule faisant également office d'une plaque bipolaire pour une autre cellule adjacente à la cellule ;
- pour au moins une cellule, chaque plaque bipolaire comprenant au moins un logement, dit logement de connexion, configuré pour recevoir un connecteur électrique destiné à mesurer un paramètre électrique de la pile ;
- chaque logement de connexion s'étendant principalement selon une direction, dite de connexion, contenue dans un plan perpendiculaire à la direction d'empilement ;
- chaque logement de connexion présentant une embouchure formant une ouverture présentant une dimension maximale Dc prise en projection dans un plan, dit transverse, perpendiculaire à la direction de connexion.

Pour ladite au moins une cellule, chaque plaque bipolaire comprend au moins un logement, dit inactif, présentant une embouchure formant une ouverture présentant une dimension maximale Di, prise en projection dans le plan transverse, telle que Dc est strictement supérieure à Di, et en ce que l'empilement est configuré de sorte que pour une première plaque bipolaire de ladite au moins une cellule, l'embouchure d'un logement de connexion de la première plaque bipolaire :
- est situé au droit, selon une direction parallèle à la direction d'empilement, de l'embouchure d'un logement inactif de la deuxième plaque bipolaire de ladite au moins une cellule; et
- masque une partie au moins de l'embouchure du logement inactif de la deuxième plaque bipolaire selon une projection dans le plan transverse.

Ainsi, le masquage des logements inactifs par les logements de connexion réduit, voire supprime, le risque qu'une fiche mâle soit insérée dans un logement de connexion. Ainsi, on facilite l'insertion des connecteurs pour des prises de mesure d'un paramètre électrique caractéristique de la pile, par exemple une tension d'au moins une cellule de la pile. L'assemblage d'une pile à combustible et des fiches de mesure d'un paramètre électrique est donc rendu considérablement plus fiable et rapide. L'invention permet ainsi de rendre les piles à combustibles plus fiables et moins coûteuses.

Selon un autre aspect, il est proposé une pile à combustible, comprenant un empilement tel que défini ci-avant, un premier circuit de distribution configuré pour distribuer un premier fluide aux premières électrodes des cellules de la pile et un deuxième circuit de distribution configuré pour distribuer un deuxième fluide aux deuxièmes électrodes des cellules de la pile.

Selon un autre aspect, il est proposé un procédé de fabrication d'un empilement pour pile à combustible, comprenant une fourniture :
- d'un empilement comportant une pluralité de cellules disposées successivement selon une direction, dite d'empilement, chaque cellule comprenant :
- un assemblage comprenant deux électrodes et une membrane formant un électrolyte, la membrane étant placée entre les deux électrodes ; et
- deux plaques bipolaires enserrant l'assemblage, chaque plaque bipolaire d'une cellule faisant également office d'une plaque bipolaire pour une autre cellule adjacente à la cellule ;
- le procédé comprenant une première formation, pour chaque plaque bipolaire d'au moins une cellule, d'au moins un logement, dit logement de connexion, configuré pour recevoir un connecteur électrique destiné à mesurer un paramètre électrique de la pile ;
- chaque logement de connexion s'étendant principalement selon une direction, dite de connexion, contenue dans un plan perpendiculaire à la direction d'empilement ;
- chaque logement de connexion présentant une embouchure formant une ouverture présentant une dimension maximale Dc prise en projection dans un plan, dit transverse, perpendiculaire à la direction de connexion.

Le procédé comprend, pour chaque plaque bipolaire de ladite au moins une cellule, une deuxième formation d'au moins un logement, dit inactif, présentant une embouchure formant une ouverture présentant une dimension maximale Di, prise en projection dans le plan transverse, telle que Dc est strictement supérieure à Di, et en ce que l'empilement est configuré de sorte que pour une première plaque bipolaire de ladite au moins une cellule, l'embouchure d'un logement inactif de la première plaque bipolaire :
- est situé au droit, selon une direction parallèle à la direction d'empilement, de l'embouchure d'un logement inactif de la deuxième plaque bipolaire de ladite au moins une cellule ; et
- masque une partie au moins de l'embouchure du logement inactif de la deuxième plaque bipolaire selon une projection dans le plan transverse.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
la figure 1 illustre de façon schématique une vue en coupe d'un mode de réalisation d'un empilement de cellules d'une pile à combustible ;
les figures 2 à 6 illustrent schématiquement, des vues en perspective des principales étapes d'un mode de mise en œuvre d'un procédé de fabrication d'une pile à combustible ;
la figure 7 illustre schématiquement, une vue en perspective d'un autre mode de mise en œuvre du procédé de fabrication d'une pile à combustible ; et
la figure 8 illustre schématiquement une vue en perspective d'un autre mode de mise en œuvre du procédé de fabrication d'une pile à combustible.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation et de mises en œuvre de l'invention, sont énoncées ci-après des caractéristiques optionnelles qui peuvent éventuellement être utilisées en association ou alternativement.

Selon un exemple, pour chaque cellule, l'embouchure d'un logement de connexion d'une plaque bipolaire d'une première cellule masque au moins à 10%, et de préférence entre 10% et 50%, selon une projection dans ledit plan transverse, l'embouchure du logement inactif de la cellule qui lui est successive. De manière préférée, l'embouchure d'un logement de connexion d'une plaque bipolaire d'une première cellule masque entièrement, selon une projection dans ledit plan transverse, l'embouchure du logement inactif de la cellule qui lui est successive.

Ainsi, le connecteur amené selon la direction de connexion ne peut pas pénétrer dans le logement inactif. Cela permet de réduire encore plus, voire de supprimer les risques d'insertion d'un connecteur dans un logement inapproprié.

Selon un exemple, l'embouchure de chaque logement de connexion présente une ouverture ayant une dimension Dc strictement supérieure au pas d'au moins une cellule de la pile, le pas d'une cellule étant égal à l'épaisseur Epb d'une plaque bipolaire additionné de l'épaisseur Ea de l'assemblage, les épaisseurs Epb et Ea étant mesurées selon la direction d'empilement.

Selon un exemple, l'embouchure de chaque logement de connexion présente une ouverture ayant une dimension Dc inférieure ou égale à deux fois le pas d'une cellule.

Selon un exemple, chaque logement de connexion et chaque logement inactif comprend une portion longitudinale, les portions longitudinales des logements inactifs étant identiques, en termes de forme et de dimension, à une partie au moins de chaque portion longitudinale des logements de connexion.

Selon un exemple, chaque logement de connexion comprend une portion longitudinale et une portion, dite de guidage, qui prolonge la portion longitudinale en direction de l'embouchure et qui s'évase en direction de l'embouchure.

Selon un exemple, la portion de guidage s'évase continuellement jusqu'à l'embouchure.

Selon un exemple, la portion de guidage forme un tronc de cône.

Selon un exemple, la portion de guidage s'évase jusqu'à une portion d'extrémité distale, dont la section est constante et qui comporte l'embouchure.

Selon un exemple, la portion de guidage comporte un tronc de cône et une partie cylindrique formant la portion d'extrémité distale, située entre le tronc de cône et l'embouchure.

Selon un exemple, les ouvertures des embouchures des logements de connexion sont contenues dans un premier plan parallèle à la direction d'empilement et perpendiculaire à la direction de connexion, les ouvertures des embouchures des logements inactifs sont contenues dans un deuxième plan parallèle au premier plan, et le premier plan est situé à distance du deuxième plan de sorte que les embouchures des logements de connexion sont en saillie du deuxième plan.

Selon un exemple, une première plaque bipolaire d'une cellule comprend plusieurs logements de connexion ayant des ouvertures alignées selon une première direction transverse perpendiculaire à la direction d'empilement et perpendiculaire à la direction de connexion, et la deuxième plaque bipolaire de la cellule comprend plusieurs logements de connexion ayant des ouvertures alignées selon une deuxième direction transverse parallèle à la première direction transverse, chaque logement de connexion de la deuxième plaque bipolaire étant situé, selon la direction d'empilement, au droit d'un espace séparant deux logements de connexion de la première plaque bipolaire.

Selon un exemple, une première plaque bipolaire d'une cellule comprend une première paire de logements de connexion ayant des ouvertures alignées selon une première direction transverse perpendiculaire à la direction d'empilement et perpendiculaire à la direction de connexion, et la deuxième plaque bipolaire de la cellule comprend une deuxième paire de logements de connexion ayant des ouvertures alignées selon une deuxième direction transverse parallèle à la première direction transverse, les logements de connexion de la deuxième paire étant situés, selon la direction d'empilement, au droit d'une zone séparant les deux logements de connexion de la première paire.

Selon un exemple, une première plaque bipolaire d'une cellule comprend une première paire de logements de connexion ayant des ouvertures alignées selon une première direction transverse perpendiculaire à la direction d'empilement et perpendiculaire à la direction de connexion, et la deuxième plaque bipolaire de la cellule comprend une deuxième paire de logements de connexion ayant des ouvertures alignées selon une deuxième direction transverse parallèle à la première direction transverse, les logements de connexion de la deuxième paire étant situés, selon la direction d'empilement, au droit d'une zone de la première plaque bipolaire dépourvue de logements de connexion.

Selon un exemple, chaque plaque bipolaire comprend deux plaques monopolaires, dites demi-plaques bipolaires, comprenant respectivement deux faces tournées au regard l'une de l'autre, et chaque logement de connexion et inactif sont délimités par les deux faces.

Selon un exemple, le procédé comprend une formation, pour chaque plaque bipolaire d'au moins une cellule, d'au moins deux logements de connexion, chaque logement de connexion comprenant une portion longitudinale et une portion de guidage s'évasant depuis la portion longitudinale en direction de l'embouchure, une élaboration des logements inactifs comprenant, une découpe, pour chaque plaque bipolaire, et pour certains seulement des logements de connexion, d'une portion du logement de connexion de sorte à retirer au moins une partie de la portion de guidage, et lors de la découpe, la portion de guidage des autres logements de connexion étant conservée.

Selon un exemple, la formation, pour chaque plaque bipolaire d'au moins une cellule, desdits au moins deux logements de connexion est effectuée à l'aide d'un même outil d'emboutissage.

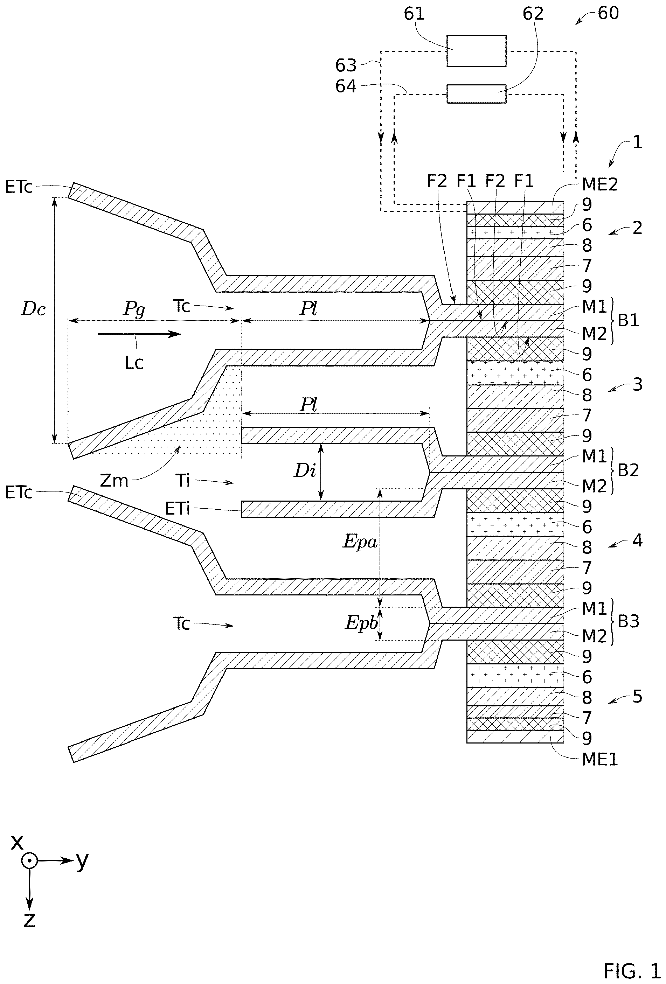

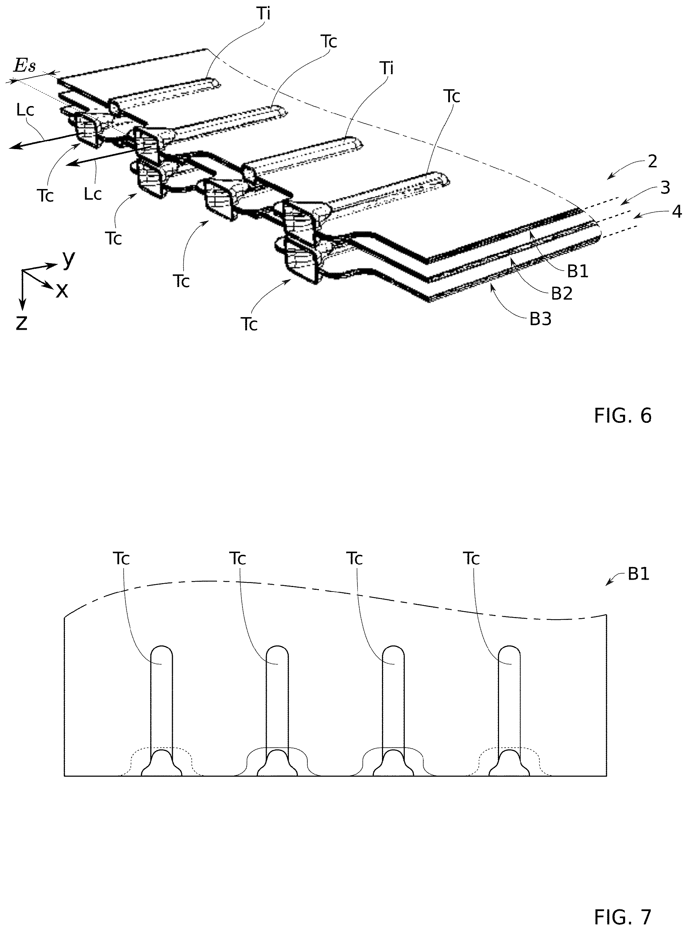

Sur les figures 1 et 6, on a représenté un empilement 1 pour pile à combustible 60. L'empilement 1 comporte une pluralité de cellules 3, 4 disposées successivement selon une direction Z, dite d'empilement. La pile 60 comprend en outre deux cellules 2, 5, dites d'extrémité empilées avec les autres cellules 3, 4 de l'empilement 1. Chaque cellule 2 à 5 de la pile 60 comprend un assemblage comprenant deux électrodes 6, 7 et une membrane 8 formant un électrolyte, la membrane étant placée entre les deux électrodes 6, 7. Chaque cellule 3, 4 de l'empilement 1 comprend en outre deux plaques bipolaires B1 à B3 enserrant l'assemblage, chaque plaque bipolaire B1 à B3 d'une cellule 3, 4 faisant également office d'une plaque bipolaire B1 à B3 pour une autre cellule adjacente à la cellule. On entend par une première cellule adjacente d'une deuxième cellule, une cellule qui succède ou qui précède la deuxième cellule selon la direction d'empilement Z. En outre, chaque plaque bipolaire B1 à B3 comprend deux plaques monopolaires M1, M2 en contact l'une de l'autre. En d'autres termes, les deux plaques monopolaires comprennent respectivement deux faces tournées au regard l'une de l'autre. De préférence, chaque cellule d'extrémité est enserrée entre une plaque monopolaire d'extrémité ME1, ME2 et une plaque monopolaire M2, M1 d'une plaque bipolaire B1, B3. En particulier, les plaques monopolaires M1, M2 d'une plaque bipolaire B1 à B3 sont structurellement différentes des plaques monopolaires d'extrémité ME1, ME2. Les plaques monopolaires M1, M2 d'une plaque bipolaire B1 à B3 sont également appelées des demi-plaques bipolaires. Une cellule 2 à 5 de la pile 60 peut en outre comprendre deux couches de diffusion des gaz 9, chaque couche de diffusion des gaz 9 étant située entre une électrode 6, 7 et une plaque monopolaire M1, M2 (ou demi-plaque bipolaire).

La pile 60 comprend une source principale 61 d'un premier fluide et une source secondaire 62 d'un deuxième fluide. La pile 60 comprend un premier circuit de distribution 63 relié fluidiquement à la source principale et configuré pour distribuer le premier fluide aux premières électrodes des cellules. Par exemple, le premier fluide est du dihydrogène et les premières électrodes correspondent aux anodes où a lieu l'ionisation du dihydrogène. La pile 60 comprend un deuxième circuit de distribution 64 relié fluidiquement à la source secondaire et configuré pour distribuer le deuxième fluide aux deuxièmes électrodes des cellules. Par exemple, le deuxième fluide est du dioxygène et les deuxièmes électrodes correspondent aux cathodes où a lieu la formation d'eau à partir, notamment, du dioxygène.

La pile 60 peut également comprendre des connecteurs électriques configurés pour s'introduire dans respectivement les logements de connexion Tc afin de pouvoir mesurer un paramètre électrique de la pile 60.

Par ailleurs, pour au moins une cellule 3, 4 de l'empilement 1, chaque plaque bipolaire B1 à B3 comprend au moins un logement Tc, dit logement de connexion, configuré pour recevoir un connecteur électrique destiné à mesurer un paramètre électrique de la pile, notamment une tension d'une cellule. En particulier, chaque logement de connexion Tc correspond à une prise femelle destinée à coopérer avec une prise mâle d'un connecteur. Par exemple, un connecteur comprend une fiche et forme une prise mâle.

Chaque logement de connexion Tc s'étend selon une direction Lc, dite de connexion, contenue dans un plan X, Y perpendiculaire à la direction d'empilement Z. De manière préférée, cette direction de connexion Lc est parallèle à une direction de translation que la fiche mâle doit effectuer relativement au logement de connexion Tc pour permettre une pénétration et une coopération de la fiche mâle dans le logement de connexion Tc.

En outre, chaque logement de connexion Tc présente une embouchure formant une ouverture présentant une dimension maximale Dc prise en projection dans un plan X, Z, dit transverse, perpendiculaire à la direction de connexion Lc.

Plus particulièrement, pour au moins une cellule 3, 4 de l'empilement 1, chaque plaque bipolaire B1 à B3 comprend au moins un logement Ti, dit inactif, présentant une embouchure formant une ouverture présentant une dimension maximale Di, prise en projection dans le plan transverse X, Z. Chaque logement inactif Ti s'étend selon la direction de connexion Lc.

En particulier, Dc est strictement supérieure à Di. En outre, l'empilement 1 est configuré de sorte que pour une première plaque bipolaire B1 d'une cellule 3, l'embouchure d'un logement actif de la première plaque bipolaire B1 :
- est situé au droit, selon une direction parallèle à la direction d'empilement Z, de l'embouchure d'un logement inactif Ti de la deuxième plaque bipolaire B2 de la cellule 3 ; et
- masque une partie au moins de l'embouchure du logement inactif Ti de la deuxième plaque bipolaire selon une projection dans le plan transverse X, Z.

En particulier, un tel logement de connexion Tc forme un guide pour faciliter l'insertion d'une prise mâle d'un connecteur électrique. En d'autres termes, si une fiche d'un CVP vient à se présenter en face d'un logement inactif Ti, la fiche sera dirigée vers le logement de connexion Tc qui le masque au moins en partie. Ainsi, en favorisant l'insertion d'une fiche CVP dans un logement de connexion Tc, on réduit le risque d'insérer la fiche entre une plaque bipolaire B1 à B3 et une membrane 8. Les logements inactifs ne permettent pas une prise de mesure puisque leurs embouchures sont au moins en partie masquées par les embouchures des logements de connexion Tc. La figure 1 illustre, par une zone hachurée Zm, le masquage d'un logement inactif Ti de la cellule B2 par un logement de connexion Tc de la cellule B1. Dans cet exemple, le logement inactif Ti de la cellule B2 est en partie masqué par le logement de connexion Tc de la cellule B1. De manière générale, l'embouchure ETc d'un logement de connexion Tc d'une première plaque bipolaire B1 d'une cellule 3 masque, selon une projection dans le plan transverse X, Z, au moins à 10%, de préférence entre 10% et 50%, l'embouchure ETi d'un logement inactif Ti de la deuxième plaque bipolaire de la cellule 3. Par ailleurs, cette embouchure ETi du logement inactif Ti de la deuxième plaque bipolaire de la cellule 3 peut être masquée, selon une projection dans le plan transverse X, Z, d'au moins 10%, de préférence entre 10% et 50%, par l'embouchure ETc d'un logement de connexion Tc d'une première plaque bipolaire B3 d'une autre cellule 4 successive à la cellule 3 selon la direction d'empilement Z.

En outre, chaque logement de connexion est situé au droit d'un logement inactif. On peut ainsi facilement empiler les cellules 2 à 5, en évitant que les embouchures des logements de connexion Tc entrent en collision les uns dans les autres. En d'autres termes on crée plusieurs logements de connexion avec des alignements différents.

Par exemple, chaque logement de connexion Tc et inactif Ti est formé de manière à s'étendre longitudinalement selon la direction de connexion Lc entre deux plaques monopolaires M1, M2 (ou demi-plaques bipolaires) d'une plaque bipolaire B1 à B3.

Les embouchures des logements de connexion peuvent avoir une forme circulaire, ovale, polygonale ou carrée.

Selon un autre exemple, pour chaque cellule, l'embouchure d'un logement de connexion Tc d'une plaque bipolaire d'une première cellule peut masquer, selon une projection dans ledit plan transverse X, Z, au moins à 40%, ou au moins à 60%, ou au moins à 80%, voire entièrement, l'embouchure du logement inactif Ti de la cellule qui lui est successive.

L'embouchure de chaque logement de connexion présente une ouverture ayant une dimension Dc strictement supérieure au pas d'au moins une cellule de la pile, le pas d'une cellule étant égal à l'épaisseur Epb d'une plaque bipolaire additionnée de l'épaisseur Ea de l'assemblage, les épaisseurs Epb et Ea étant mesurées selon la direction d'empilement Z. Ainsi on fournit une largeur d'insertion supérieure aux pas des cellules de la pile à combustible 60. Par exemple le pas d'une cellule peut correspondre à la moyenne des pas des cellules de la pile 60, ou au pas maximal des cellules de la pile 60.

L'embouchure de chaque logement de connexion présente une ouverture ayant une dimension Dc inférieure ou égale à deux fois le pas d'une cellule.

De préférence, la dimension Dc des ouvertures des embouchures des logements de connexion Tc a une valeur comprise entre une et deux fois le pas d'une cellule. Ces valeurs dépendent de la géométrie de l'élargissement et de la déformabilité du matériau utilisé pour réaliser les plaques bipolaires. On limite alors les contraintes fortes sur le formage de la plaque bipolaire puisque plus la dimension Dc de l'ouverture de l'embouchure est important et plus l'étirement du métal sera fort. Une contrainte plus faible est également appliquée au débord de l'AME, pour assurer une isolation électrique entre les embouchures des logements de connexion. L'AME peut comprendre un polymère souple (par exemple du polynaphtalate PEN ou polytéréphtalate PET) peu épais (inférieur à 100µm) qui devra épouser la forme extérieure des embouchures. En effet, l'isolation électrique entre les plaques bipolaires d'une cellule est généralement effectuée par l'AME de la cellule. C'est-à-dire que l'AME située entre les plaques bipolaires déborde de quelques millimètres du pourtour des plaques bipolaires, par exemple avec une épaisseur maximale de 100 µm. L'AME est configurée pour se déformer afin d'épouser la forme des embouchures des logements de connexion Tc.

En variante, Dc peut être strictement supérieur à deux fois le pas d'une cellule.

Par exemple, chaque logement de connexion et chaque logement inactif comprend une portion longitudinale, les portions longitudinales des logements inactifs étant identiques, en termes de forme et de dimension, à une partie au moins de chaque portion longitudinale des logements de connexion. De préférence, la portion longitudinale présente une section constante le long de la direction de connexion Lc en projection dans un plan perpendiculaire à la direction d'empilement. Chaque logement de connexion peut comprendre une portion longitudinale et une portion, dite de guidage, qui prolonge la portion longitudinale en direction de l'embouchure et qui s'évase en direction de l'embouchure. Préférentiellement, la portion de guidage s'évase continuellement jusqu'à l'embouchure, de préférence de manière constante. La portion de guidage peut former un tronc de cône. Par exemple, la portion de guidage Pg peut former une trompette de Gabriel.

Selon un autre exemple, la portion de guidage s'évase jusqu'à une portion d'extrémité distale, dont la section est constante et qui comporte l'embouchure. La portion de guidage peut en outre comporter un tronc de cône et une partie cylindrique formant la portion d'extrémité distale, située entre le tronc de cône et l'embouchure.

La portion longitudinale peut avoir une longueur supérieure ou égale à dix fois sa largeur. La largeur étant mesurée selon un plan parallèle à la direction d'empilement Z et perpendiculaire à la direction de connexion Lc. Ainsi, on fournit des logements de connexion adaptés pour des connecteurs électriques munis de ressorts et qui ne pénètrent pas dans la plaque bipolaire, et à des couteaux pivotants qui pénètreraient dans la plaque.

Par exemple, l'ouverture d'au moins un logement de connexion Tc s'étend dans un plan parallèle à la direction d'empilement et dépasse au moins en partie et selon la direction d'empilement, une face externe d'une plaque bipolaire d'une deuxième cellule successive.

Selon un autre exemple, chaque logement de connexion d'une plaque bipolaire a une position décalée selon une direction parallèle à la direction d'empilement par rapport à la position de chaque logement de connexion d'une plaque bipolaire d'une cellule successive. En d'autres termes, chaque logement de connexion d'une plaque bipolaire n'est pas situé au droit, selon une direction parallèle à la direction d'empilement, d'un logement de connexion d'une plaque bipolaire d'une cellule adjacente.

Sur la figure 6, on a représenté un mode de réalisation, dans lequel les embouchures des logements de connexion sont disposées selon un motif en quinconce, selon un plan parallèle à la direction d'alignement. Une première plaque bipolaire d'une cellule comprend plusieurs logements de connexion alignés selon une première direction transverse perpendiculaire à la direction d'empilement, et la deuxième plaque bipolaire de la cellule comprend plusieurs logements de connexion alignés selon une deuxième direction transverse perpendiculaire à la direction d'empilement. Selon ce motif en quinconce, chaque logement de connexion de la deuxième plaque bipolaire est situé, selon la direction d'empilement, au droit d'un espace séparant deux logements de connexion de la première plaque bipolaire. En particulier, l'espace est dépourvu de logements de connexion.

On peut choisir un autre motif, dit motif en miroir, de disposition des embouchures des logements de connexion. Selon le motif en miroir, une première plaque bipolaire d'une cellule comprend une première paire de logements de connexion alignés selon une première direction transverse perpendiculaire à la direction d'empilement, et la deuxième plaque bipolaire de la cellule comprend une deuxième paire de logements de connexion alignés selon une deuxième direction transverse perpendiculaire à la direction d'empilement. Selon ce motif en miroir, les logements de connexion de deuxième paire sont situés, selon la direction d'empilement, au droit d'une zone séparant les deux logements de connexion de la première paire. En particulier, la zone est dépourvue de logements de connexion.

On peut choisir encore un autre motif, dit motif en groupe de deux, de disposition des embouchures des logements de connexion. Selon le motif en groupe de deux, une première plaque bipolaire d'une cellule comprend une première paire de logements de connexion alignés selon une première direction transverse perpendiculaire à la direction d'empilement, et la deuxième plaque bipolaire de la cellule comprend une deuxième paire de logements de connexion alignés selon une deuxième direction transverse perpendiculaire à la direction d'empilement. Selon ce motif en groupe de deux, les logements de connexion Tc de la deuxième paire sont situés, selon la direction d'empilement, au droit d'une zone de la première plaque bipolaire dépourvue de logements de connexion Tc.

Chaque logement de connexion et inactif sont délimités par les deux faces tournées en regard l'une de l'autre de deux plaques monopolaires M1, M (ou demi-plaques bipolaires) d'une plaque bipolaire B1 à B3.

Il est également possible de réaliser les mesures non pas pour toutes les cellules de l'empilement, mais toutes les N cellules. Dans ce cas, la distance Dc maximale des ouvertures des embouchures est N*P, avec N un nombre entier correspondant au nombre de cellules et P correspondant au pas de la cellule (en millimètres).

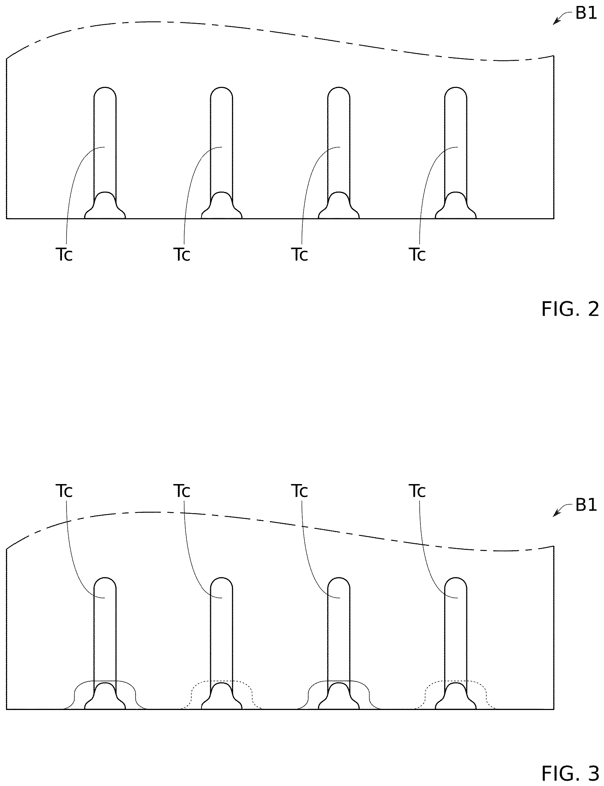

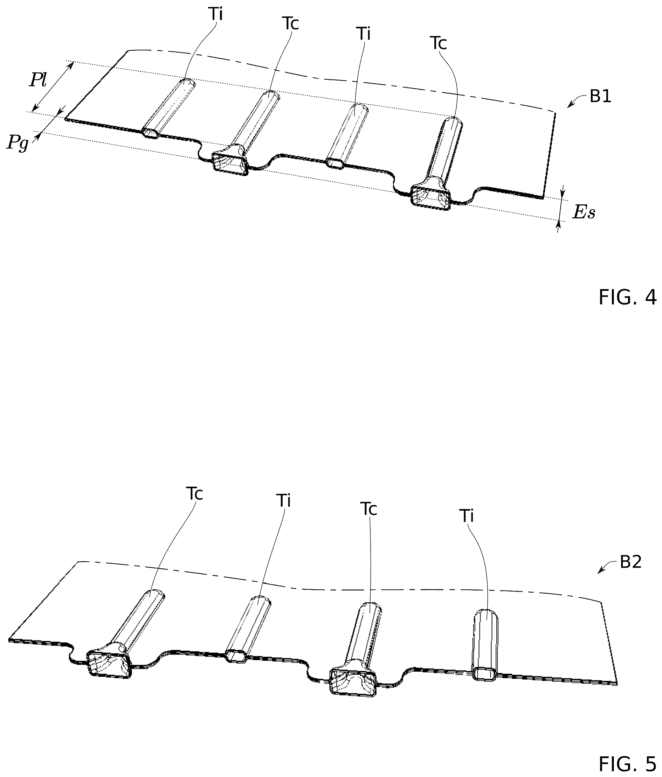

Sur les figures 2 à 6, on a représenté les étapes principales d'un procédé de fabrication d'un empilement 1 pour pile à combustible 60. En particulier, comme illustré sur la figure 2, le procédé comprend une formation, pour chaque plaque bipolaire d'au moins une cellule, d'au moins deux logements de connexion Tc. Puis, sur la figure 3 on a représenté des lignes de découpe pour élaborer les logements inactifs Ti. Par exemple, le procédé comprend une élaboration des logements inactifs comprenant, une découpe, pour chaque plaque bipolaire, et pour certains seulement des logements de connexion, d'une portion du logement de connexion de sorte à retirer au moins une partie de la portion de guidage. En particulier, on retire une partie de la portion de guidage Pg de sorte à obtenir Di strictement inférieure à Dc. Par exemple, on peut retirer une partie de la portion de guidage Pg de sorte à obtenir Di inférieure ou égale au pas d'au moins une cellule de la pile à combustible 60. Sur la figure 3, on a représenté en trait plein une première ligne de découpe pour obtenir une première plaque bipolaire, d'un premier type, et une deuxième ligne de découpe en pointillé pour obtenir la deuxième plaque bipolaire, d'un deuxième type. On obtient ainsi une première plaque bipolaire B1, du premier type, illustrée à la figure 4 et une deuxième plaque bipolaire B2, du deuxième type, illustrée à la figure 5. Lors de la découpe, la portion évasée des autres logements de connexion est conservée. Par exemple, la découpe de certains logements de connexion est effectuée de sorte que les embouchures des logements de connexion sont placées en quinconce, comme illustré sur la figure 6, selon un plan parallèle à la direction d'empilement et perpendiculaire aux directions de connexion Lc. En d'autres termes, une plaque bipolaire B1 à B3 comprend une pluralité d'espaces formant un retrait sur le contour de la plaque B1 à B3, l'embouchure des logements inactifs Ti sont situés dans les espaces, de sorte que :
a. les embouchures des logements de connexion Tc sont situées sur une première ligne contenue dans le plan X, Y ;
b. les embouchures des logements inactifs Ti sont situées sur une deuxième ligne contenue dans le plan X, Y, la deuxième ligne étant parallèle à la première ligne et située à une distance Es non nulle, comme illustré aux figures 4 et 6.

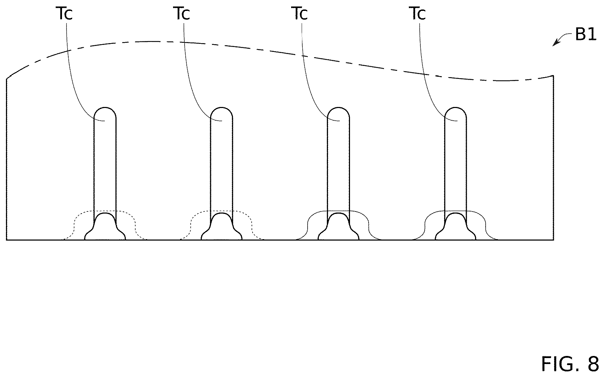

Sur la figure 7, on a représenté d'autres lignes de découpe pour obtenir un motif en miroir. Sur la figure 8, on a représenté d'autres lignes de découpe pour obtenir un motif en groupe de deux.

Un intérêt de réaliser les plaques bipolaires avec tous les logements évasés puis de découper ceux qui ne seront pas utilisés, en formant les logements inactifs Ti, est de pouvoir réaliser les deux plaques bipolaires d'une même cellule avec un seul jeu d'emboutissage des plaques. La différence entre la première plaque bipolaire et la deuxième plaque bipolaire est réalisée par une différence de découpe. Ainsi on évite de multiplier les outils de fabrication des plaques bipolaire qui sont très couteux.

Avantageusement, avec des plaques bipolaires de deux types différents, on peut réaliser toutes les plaques bipolaires de la pile 60. On économise la variété de plaques bipolaires à utiliser.

## Revendications

1. Empilement (1) pour pile à combustible, l'empilement (1) comportant une pluralité de cellules (3, 4) disposées successivement selon une direction (Z), dite d'empilement (1), chaque cellule comprenant :
- un assemblage comprenant deux électrodes (6, 7) et une membrane (8) formant un électrolyte, la membrane étant placée entre les deux électrodes ; et
- deux plaques bipolaires (B1-B3) enserrant l'assemblage, chaque plaque bipolaire d'une cellule faisant également office d'une plaque bipolaire pour une autre cellule adjacente à la cellule ;
- pour au moins une cellule (3, 4), chaque plaque bipolaire (B1-B3) comprenant au moins un logement (Tc), dit logement de connexion, configuré pour recevoir un connecteur électrique destiné à mesurer un paramètre électrique de la pile ;
- chaque logement de connexion (Tc) s'étendant principalement selon une direction (Lc), dite de connexion, contenue dans un plan (X, Y) perpendiculaire à la direction d'empilement (Z) ;
- chaque logement de connexion (Tc) présentant une embouchure (ETc) formant une ouverture présentant une dimension maximale Dc prise en projection dans un plan (X, Z), dit transverse, perpendiculaire à la direction de connexion (Lc) ;
**caractérisé en ce que** pour ladite au moins une cellule (3, 4), chaque plaque bipolaire (B1-B3) comprend au moins un logement (Ti), dit inactif, présentant une embouchure (ETi) formant une ouverture présentant une dimension maximale Di, prise en projection dans le plan transverse (X, Z), telle que Dc est strictement supérieure à Di, et **en ce que** l'empilement (1) est configuré de sorte que pour une première plaque bipolaire de ladite au moins une cellule, l'embouchure d'un logement de connexion (Tc) de la première plaque bipolaire :
- est situé au droit, selon une direction parallèle à la direction d'empilement (Z), de l'embouchure d'un logement inactif (Ti) de la deuxième plaque bipolaire de ladite au moins une cellule ; et
- masque une partie au moins de l'embouchure du logement inactif (Ti) de la deuxième plaque bipolaire selon une projection dans le plan transverse (X, Z).

2. Empilement (1) selon la revendication 1, dans lequel, pour chaque cellule, l'embouchure d'un logement de connexion (Tc) d'une plaque bipolaire d'une première cellule masque, selon une projection dans ledit plan transverse (X, Z), au moins 10%, de préférence entre 10% et 50%, de l'embouchure du logement inactif (Ti) de la cellule qui lui est successive.

3. Empilement (1) selon l'une quelconque des revendications précédentes, dans lequel l'embouchure de chaque logement de connexion (Tc) présente une ouverture ayant une dimension Dc strictement supérieure au pas d'au moins une cellule de la pile, le pas d'une cellule étant égal à l'épaisseur Epb d'une plaque bipolaire additionné de l'épaisseur Ea de l'assemblage, les épaisseurs Epb et Ea étant mesurées selon la direction d'empilement (Z).

4. Empilement (1) selon la revendication précédente, dans lequel l'embouchure de chaque logement de connexion (Tc) présente une ouverture ayant une dimension Dc inférieure ou égale à deux fois le pas d'une cellule.

5. Empilement (1) selon l'une quelconque des revendications précédentes, dans lequel chaque logement de connexion (Tc) et chaque logement inactif (Ti) comprend une portion longitudinale, les portions longitudinales des logements inactifs (Ti) étant identiques, en termes de forme et de dimension, à une partie au moins de chaque portion longitudinale des logements de connexion (Tc).

6. Empilement (1) selon l'une quelconque des revendications précédentes, dans lequel chaque logement de connexion (Tc) comprend une portion longitudinale (PI) et une portion, dite de guidage (Pg), qui prolonge la portion longitudinale (PI) en direction de l'embouchure et qui s'évase en direction de l'embouchure.

7. Empilement (1) selon l'une quelconque des revendications précédentes, dans lequel la portion de guidage (Pg) s'évase continuellement jusqu'à l'embouchure.

8. Empilement (1) selon l'une quelconque des revendications précédentes, dans lequel, les ouvertures des embouchures (ETc) des logements de connexion (Tc) sont contenues dans un premier plan parallèle à la direction d'empilement (Z) et perpendiculaire à la direction de connexion (Lc), les ouvertures des embouchures (ETi) des logements inactifs (Ti) sont contenues dans un deuxième plan parallèle au premier plan, et le premier plan est situé à distance du deuxième plan de sorte que les embouchures (ETc) des logements de connexion (Tc) sont en saillie du deuxième plan.

9. Empilement (1) selon l'une quelconque des revendications précédentes, dans lequel une première plaque bipolaire (B1) d'une cellule comprend plusieurs logements de connexion (Tc) ayant des ouvertures alignées selon une première direction transverse perpendiculaire à la direction d'empilement (Z) et perpendiculaire à la direction de connexion (Lc), et la deuxième plaque bipolaire (B2) de la cellule comprend plusieurs logements de connexion (Tc) ayant des ouvertures alignées selon une deuxième direction transverse parallèle à la première direction transverse, chaque logement de connexion (Tc) de la deuxième plaque bipolaire (B2) étant situé, selon la direction d'empilement (Z), au droit d'un espace séparant deux logements de connexion (Tc) de la première plaque bipolaire (B1).

10. Empilement (1) selon l'une quelconque des revendications 1 à 9, dans lequel une première plaque bipolaire (B1) d'une cellule comprend une première paire de logements de connexion (Tc) ayant des ouvertures alignées selon une première direction transverse perpendiculaire à la direction d'empilement (Z) et perpendiculaire à la direction de connexion (Lc), et la deuxième plaque bipolaire (B2) de la cellule comprend une deuxième paire de logements de connexion (Tc) ayant des ouvertures alignées selon une deuxième direction transverse parallèle à la première direction transverse, les logements de connexion (Tc) de la deuxième paire étant situés, selon la direction d'empilement (Z), au droit d'une zone de la première plaque bipolaire (B1) dépourvue de logements de connexion (Tc).

11. Empilement (1) selon l'une quelconque des revendications précédentes, dans lequel, chaque plaque bipolaire (B1 à B3) comprend deux plaques monopolaires (M1, M2), dites demi-plaques bipolaires, comprenant respectivement deux faces (F1, F2) tournées au regard l'une de l'autre, et chaque logement de connexion (Tc) et inactif (Ti) sont délimités par les deux faces (F1, F2).

12. Pile à combustible, comprenant un empilement (1) selon l'une quelconque des revendications précédentes, un premier circuit de distribution (63) configuré pour distribuer un premier fluide aux premières électrodes (6) des cellules (2 à 5) de la pile (60) et un deuxième circuit de distribution (64) configuré pour distribuer un deuxième fluide aux deuxièmes électrodes (7) des cellules (2 à 5) de la pile (60).

13. Procédé de fabrication d'un empilement (1) pour pile à combustible, le procédé comprenant une fourniture d'un empilement (1) comportant une pluralité de cellules (3, 4) disposées successivement selon une direction (Z), dite d'empilement (1), chaque cellule comprenant :
- un assemblage comprenant deux électrodes (6, 7) et une membrane (8) formant un électrolyte, la membrane étant placée entre les deux électrodes ; et
- deux plaques bipolaires (B1-B3) enserrant l'assemblage, chaque plaque bipolaire d'une cellule faisant également office d'une plaque bipolaire pour une autre cellule adjacente à la cellule ;
le procédé comprenant une première formation, pour chaque plaque bipolaire d'au moins une cellule, d'au moins un logement (Tc), dit logement de connexion, configuré pour recevoir un connecteur électrique destiné à mesurer un paramètre électrique de la pile ;
- chaque logement de connexion (Tc) s'étendant principalement selon une direction (Lc), dite de connexion, contenue dans un plan (X, Y) perpendiculaire à la direction d'empilement (Z) ;
- chaque logement de connexion (Tc) présentant une embouchure (ETc) formant une ouverture présentant une dimension maximale Dc prise en projection dans un plan (X, Z), dit transverse, perpendiculaire à la direction de connexion (Lc) ;
**caractérisé en ce que** le procédé comprend, pour chaque plaque bipolaire de ladite au moins une cellule, une deuxième formation d'au moins un logement (Ti), dit inactif, présentant une embouchure formant une ouverture présentant une dimension maximale Di, prise en projection dans le plan transverse (X, Z), telle que Dc est strictement supérieure à Di, et **en ce que** l'empilement (1) est configuré de sorte que pour une première plaque bipolaire de ladite au moins une cellule, l'embouchure (ETi) d'un logement inactif (Ti) de la première plaque bipolaire :
- est situé au droit, selon une direction parallèle à la direction d'empilement (Z), de l'embouchure d'un logement inactif (Ti) de la deuxième plaque bipolaire de ladite au moins une cellule; et
- masque une partie au moins de l'embouchure du logement inactif (Ti) de la deuxième plaque bipolaire selon une projection dans le plan transverse (X, Z).

14. Procédé selon la revendication précédente, comprenant une formation, pour chaque plaque bipolaire d'au moins une cellule, d'au moins deux logements de connexion (Tc), chaque logement de connexion (Tc) comprenant une portion longitudinale (PI) et une portion de guidage (Pg) s'évasant depuis la portion longitudinale en direction de l'embouchure (ETc), une élaboration des logements inactifs (Ti) comprenant, une découpe, pour chaque plaque bipolaire, et pour certains seulement des logements de connexion (Tc), d'une portion du logement de connexion (Tc) de sorte à retirer au moins une partie de la portion de guidage, et lors de la découpe, la portion de guidage des autres logements de connexion (Tc) étant conservée.

15. Procédé selon la revendication précédente, dans lequel la formation, pour chaque plaque bipolaire d'au moins une cellule, desdits au moins deux logements de connexion (Tc) est effectuée à l'aide d'un même outil d'emboutissage.

## Patentansprüche

1. Stapel (1) für Brennstoffzelle, wobei der Stapel (1) eine Vielzahl von Zellen (3, 4) umfasst, die nacheinander entlang einer Richtung (Z), Stapelrichtung (1) genannt, angeordnet sind, wobei jede Zelle Folgendes umfasst:
- eine Anordnung, die zwei Elektroden (6, 7) und eine Membran (8), die einen Elektrolyt bildet, umfasst, wobei die Membran zwischen den beiden Elektroden platziert ist; und
- zwei bipolare Platten (B1-B3), die die Anordnung umschließen, wobei jede bipolare Platte einer Zelle auch als eine bipolare Platte für eine andere, an die Zelle angrenzende Zelle dient;
wobei für mindestens eine Zelle (3, 4) jede bipolare Platte (B1-B3) mindestens eine Aufnahme (Tc), Verbindungsaufnahme genannt, umfasst, die dazu konfiguriert ist, einen elektrischen Verbinder aufzunehmen, der zum Messen eines elektrischen Parameters der Zelle konfiguriert ist;
- wobei sich jede Verbindungsaufnahme (Tc) im Wesentlichen entlang einer Richtung (Lc), die als Verbindungsrichtung bezeichnet wird, erstreckt, die in einer Ebene (X, Y) senkrecht zu der Stapelrichtung (Z) enthalten ist;
- wobei jede Verbindungsaufnahme (Tc) eine Mündung (ETc) umfasst, die eine Öffnung bildet, die ein maximales Maß De in Projektion in einer Ebene (X, Z) genommen die als Querebene bezeichnet wird, senkrecht zu der Verbindungsrichtung (Lc) aufweist;
**dadurch gekennzeichnet, dass** für die mindestens eine Zelle (3, 4) jede bipolare Platte (B1-B3) mindestens eine Aufnahme (Ti), als inaktive Aufnahme bezeichnet, umfasst, die eine Mündung (ETi) aufweist, die eine Öffnung bildet, die ein maximales Maß Di in Projektion in der Querebene (X, Z) genommen derart aufweist, dass De strikt größer als Di ist, und dass der Stapel (1) derart konfiguriert ist, dass die Mündung einer Verbindungsaufnahme (Tc) der ersten bipolaren Platte für eine erste bipolare Platte der mindestens einen Zelle:
- senkrecht entlang einer Richtung parallel zu der Stapelrichtung (Z) der Mündung einer inaktiven Aufnahme (Ti) der zweiten bipolaren Platte der mindestens einen Zelle liegt; und
- mindestens einen Teil der Mündung der inaktiven Aufnahme (Ti) der zweiten bipolaren Platte entlang einer Projektion in der Querebene (X, Z) maskiert.

2. Stapel (1) nach Anspruch 1, wobei für jede Zelle die Mündung einer Verbindungsaufnahme (Tc) einer bipolaren Platte einer ersten Zelle gemäß einer Projektion in der Querebene (X, Z) mindestens 10 %, bevorzugt zwischen 10 % und 50 % der Mündung der inaktiven Aufnahme (Ti) der Zelle, die auf sie folgt, maskiert.

3. Stapel (1) nach einem der vorstehenden Ansprüche, wobei die Mündung jeder Verbindungsaufnahme (Tc) eine Öffnung aufweist, die ein Maß De strikt größer als die Teilung mindestens einer Zelle der Brennstoffzelle aufweist, wobei die Teilung einer Zelle gleich der Dicke Epb einer bipolaren Platte zuzüglich der Dicke Ea der Anordnung ist, wobei die Dicken Epb und Ea entlang der Stapelrichtung (Z) gemessen sind.

4. Stapel (1) nach dem vorstehenden Anspruch, wobei die Mündung jeder Verbindungsaufnahme (Tc) eine Öffnung aufweist, die ein Maß De aufweist, das kleiner oder gleich dem Zweifachen der Teilung einer Zelle ist.

5. Stapel (1) nach einem der vorstehenden Ansprüche, wobei jede Verbindungsaufnahme (Tc) und jede interaktive Aufnahme (Ti) einen Längsabschnitt umfasst, wobei die Längsabschnitte der inaktiven Aufnahmen (Ti) hinsichtlich der Form und Dimension mit mindestens einem Teil jedes Längsabschnitts der Verbindungsaufnahme (Tc) identisch sind.

6. Stapel (1) nach einem der vorstehenden Ansprüche, wobei jede Verbindungsaufnahme (Tc) einen Längsabschnitt (PI) und einen Abschnitt, als Führungsabschnitt (Pg) bezeichnet, umfasst, der den Längsabschnitt (PI) in Richtung der Mündung verlängert und sich in Richtung der Mündung aufweitet.

7. Stapelung (1) nach einem der vorstehenden Ansprüche, wobei sich der Führungsabschnitt (Pg) durchgehend bis zur Mündung aufweitet.

8. Stapel (1) nach einem der vorstehenden Ansprüche, wobei die Öffnungen der Mündungen (ETc) der Verbindungsaufnahmen (Tc) in einer ersten Ebene parallel zu der Stapelrichtung (Z) und senkrecht zu der Verbindungsrichtung (Lc) enthalten sind, wobei die Öffnungen der Mündungen (ETi) der inaktiven Aufnahmen (Ti) in einer zweiten Ebene parallel zu der ersten Ebene enthalten sind, und die erste Ebene von der zweiten Ebene derart beabstandet liegt, dass die Mündungen (ETc) der Verbindungsaufnahmen (Tc) von der zweiten Ebene vorragen.

9. Stapel (1) nach einem der vorstehenden Ansprüche, wobei eine erste bipolare Platte (B1) einer Zelle mehrere Verbindungsaufnahmen (Tc) aufweist, die Öffnungen aufweisen, die entlang einer ersten Querrichtung senkrecht zu der Stapelrichtung (Z) und senkrecht zu der Verbindungsrichtung (Lc) ausgerichtet sind, und die zweite bipolare Platte (B2) der Zelle mehrere Verbindungsaufnahmen (Tc) umfasst, die Öffnungen aufweisen, die entlang einer zweiten Querrichtung parallel zu der ersten Querrichtung ausgerichtet sind, wobei jede Verbindungsaufnahme (Tc) der zweiten bipolaren Platte (B2) entlang der Stapelrichtung (Z) senkrecht zu einem Raum liegt, der zwei Verbindungsaufnahmen (Tc) der ersten bipolaren Platte (B1) trennt.

10. Stapel (1) nach einem der Ansprüche 1 bis 9, wobei eine erste bipolare Platte (B1) einer Zelle ein erstes Paar von Verbindungsaufnahmen (Tc) umfasst, die Öffnungen aufweisen, die entlang einer ersten Querrichtung senkrecht zu der Stapelrichtung (Z) und senkrecht zu der Verbindungsrichtung (Lc) ausgerichtet sind, und die zweite bipolare Platte (B2) der Zelle ein zweites Paar von Verbindungsaufnahmen (Tc) umfasst, die Öffnungen aufweisen, die entlang einer zweiten Querrichtung parallel zu der ersten Querrichtung ausgerichtet sind, wobei die Verbindungsaufnahmen (Tc) des zweiten Paares entlang der Stapelrichtung (Z) senkrecht zu einer Zone der ersten bipolaren Platte (B1) ohne Verbindungsaufnahmen (Tc) liegen.

11. Stapel (1) nach einem der vorstehenden Ansprüche, wobei jede bipolare Platte (B1 bis B3) zwei einpolige Platten (M1, M2), als bipolare Halbplatten bezeichnet, umfasst, die jeweils zwei Flächen (F1, F2) umfassen, die einander zugewandt sind, und wobei jede Verbindungsaufnahme (Tc) und inaktive Aufnahme (Ti) durch die beiden Flächen (F1, F2) begrenzt ist.

12. Brennstoffzelle, die einen Stapel (1) nach einem der vorstehenden Ansprüche, einen ersten Verteilungskreislauf (63), der dazu konfiguriert ist, ein erstes Fluid an die ersten Elektroden (6) der Zellen (2 bis 5) der Brennstoffzelle (60) zu verteilen, und einen zweiten Verteilungskreislauf (64), der dazu konfiguriert ist, ein zweites Fluid an die zweiten Elektroden (7) der Zellen (2 bis 5) der Brennstoffzelle (60) zu verteilen, umfasst.

13. Herstellungsverfahren eines Stapels (1) für eine Brennstoffzelle, wobei das Verfahren eine Bereitstellung eines Stapels (1) umfasst, der eine Vielzahl von Zellen (3, 4) umfasst, die nacheinander entlang einer Richtung (Z), als Stapelrichtung (1) bezeichnet, angeordnet sind, wobei jede Zelle Folgendes umfasst:
- eine Anordnung, die zwei Elektroden (6, 7) und eine Membran (8), die einen Elektrolyt bildet, umfasst, wobei die Membran zwischen den beiden Elektroden platziert ist; und
- zwei bipolare Platten (B1-B3), die die Anordnung umschließen, wobei jede bipolare Platte einer Zelle auch als eine bipolare Platte für eine andere, an die Zelle angrenzende Zelle dient;
wobei das Verfahren eine erste Ausbildung für jede bipolare Platte mindestens einer Zelle, mindestens eine Aufnahme (Tc), als Verbindungsaufnahme bezeichnet, umfasst, die dazu konfiguriert ist, einen elektrischen Verbinder aufzunehmen, der dazu bestimmt ist, einen elektrischen Parameter der Brennstoffzelle zu messen;
- wobei sich jede Verbindungsaufnahme (Tc) im Wesentlichen gemäß einer Richtung (Lc), die als Verbindungsrichtung bezeichnet wird, erstreckt, die in einer Ebene (X, Y) senkrecht zu der Stapelrichtung (Z) enthalten ist;
- wobei jede Verbindungsaufnahme (Tc) eine Mündung (ETc) umfasst, die eine Öffnung bildet, die ein maximales Maß De in Projektion in einer Ebene (X, Z) genommen, die als Querebene bezeichnet wird, senkrecht zu der Verbindungsrichtung (Lc) aufweist;
**dadurch gekennzeichnet, dass** das Verfahren für jede bipolare Platte der mindestens einen Zelle eine zweite Ausbildung mindestens einer Aufnahme (Ti), die als inaktiv bezeichnet wird, umfasst, die eine Mündung aufweist, die eine Öffnung bildet, die ein maximales Maß Di aufweist, das in Projektion in der Querebene (X, Z) derart genommen wird, dass De strikt größer ist als Di, und dass der Stapel (1) derart konfiguriert ist, dass für eine erste bipolare Platte der mindestens einen Zelle die Mündung (ETi) einer inaktiven Aufnahme (Ti) der ersten bipolaren Platte:
- senkrecht entlang einer Richtung parallel zu der Stapelrichtung (Z) der Mündung einer inaktiven Aufnahme (Ti) der zweiten bipolaren Platte der mindestens einen Zelle liegt; und
- mindestens einen Teil der Mündung der inaktiven Aufnahme (Ti) der zweiten bipolaren Platte entlang einer Projektion in der Querebene (X, Z) maskiert.

14. Verfahren nach dem vorstehenden Anspruch, das eine Ausbildung für jede bipolare Platte mindestens einer Zelle mit mindestens zwei Verbindungsaufnahmen (Tc) umfasst, wobei jede Verbindungsaufnahme (Tc) einen Längsabschnitt (PI) und einen Führungsabschnitt (Pg) umfasst, der sich von dem Längsabschnitt in Richtung der Mündung (ETc) aufweitet, wobei eine Erstellung der inaktiven Aufnahmen (Ti) einen Ausschnitt für jede bipolare Platte umfasst und nur für bestimmte der Verbindungsaufnahmen (Tc) einen Abschnitt der Verbindungsaufnahme (Tc) derart, dass mindestens ein Teil des Führungsabschnitts entfernt wird, und beim Ausschneiden der Führungsabschnitt der anderen Verbindungsaufnahmen (Tc) beibehalten wird.

15. Verfahren nach einem der vorstehenden Ansprüche, wobei die Ausbildung für jede bipolare Platte mindestens einer Zelle der mindestens zwei Verbindungsaufnahmen (Tc) mit Hilfe desselben Stanzwerkzeugs erfolgt.

## Claims

1. Fuel cell stack (1), the stack (1) comprising a plurality of cells (3, 4) disposed successively along a so-called stacking direction (Z), each cell comprising:
- an assembly comprising two electrodes (6, 7) and a membrane (8) forming an electrolyte, the membrane being placed between the two electrodes; and
- two bipolar plates (B1-B3) enclosing the assembly, each bipolar plate of a cell also acting as a bipolar plate for another cell adjacent to the cell;
- for at least one cell (3, 4), each bipolar plate (B1-B3) comprising at least one housing (Tc), called connecting housing, configured to receive an electric connector intended to measure an electric parameter of the cell;
- each connecting housing (Tc) extending mainly along a so-called connecting direction (Lc), contained in a plane (X, Y) perpendicular to the stacking direction (Z);
- each connecting housing (Tc) having a mouth (ETc) forming an opening having a maximum dimension Dc taken projecting into a so-called transverse plane (X, Z), perpendicular to the connecting direction (Lc);
**characterised in that** for said at least one cell (3, 4), each bipolar plate (B1-B3) comprises at least one so-called inactive housing (Ti), having a mouth (ETi) forming an opening having a maximum dimension Di, taken projecting into the transverse plane (X, Z), such that Dc is strictly greater than Di, and **in that** the stack (1) is configured such that for a first bipolar plate of said at least one cell, the mouth of a connecting housing (Tc) of the first bipolar plate:
- is located opposite, along a direction parallel to the stacking direction (Z), of the mouth of an inactive housing (Ti) of the second bipolar plate of said at least one cell; and
- masks at least one part of the mouth of the inactive housing (Ti) of the second bipolar plate along a projection into the transverse plane (X, Z).

2. Stack (1) according to claim 1, wherein, for each cell, the mouth of a connecting housing (Tc) of a bipolar plate of a first mask cell, along a projection into said transverse plane (X, Z), at least 10%, preferably between 10% and 50%, of the mouth of the inactive housing (Ti) of the cell which is successive to it.

3. Stack (1) according to any one of the preceding claims, wherein the mouth of each connecting housing (Tc) has an opening having a dimension Dc strictly greater than the pitch of at least one cell of the cell, the pitch of a cell being equal to the thickness Epb of an added bipolar plate of the thickness Ea of the assembly, the thicknesses Epb and Ea being measured along the stacking direction (Z).

4. Stack (1) according to the preceding claim, wherein the mouth of each connecting housing (Tc) has an opening having a dimension Dc less than or equal to twice the pitch of a cell.

5. Stack (1) according to any one of the preceding claims, wherein each connecting housing (Tc) and each inactive housing (Ti) comprises a longitudinal portion, the longitudinal portions of the inactive housings (Ti) being identical, in terms of shape and of dimension, at at least one part of each longitudinal portion of the connecting housings (Tc).

6. Stack (1) according to any one of the preceding claims, wherein each connecting housing (Tc) comprises a longitudinal portion (PI) and a so-called guiding portion (Pg), which extends the longitudinal portion (PI) in the direction of the mouth, and which flares in the direction of the mouth.

7. Stack (1) according to any one of the preceding claims, wherein the guiding portion (Pg) flares continually to the mouth.

8. Stack (1) according to any one of the preceding claims, wherein, the openings of the mouths (ETc) of the connecting housings (Tc) are contained in a first plane parallel to the stacking direction (Z) and perpendicular to the connecting direction (Lc), the openings of the mouths (ETi) of the inactive housings (Ti) are contained in a second plane parallel to the first plane, and the first plane is located at a distance from the second plane, such that the mouths (ETc) of the connecting housings (Tc) project from the second plane.

9. Stack (1) according to any one of the preceding claims, wherein a first bipolar plate (B1) of a cell comprises several connecting housings (Tc) having openings aligned along a first transverse direction perpendicular to the stacking direction (Z) and perpendicular to the connecting direction (Lc), and the second bipolar plate (B2) of the cell comprises several connecting housings (Tc) having openings aligned along a second transverse direction parallel to the first transverse direction, each connecting housing (Tc) of the second bipolar plate (B2) being located, along the stacking direction (Z), to the right of a space separating two connecting housings (Tc) of the first bipolar plate (B1).

10. Stack (1) according to any one of claims 1 to 9, wherein a first bipolar plate (B1) of a cell comprises a first pair of connecting housings (Tc) having openings aligned along a first transverse direction perpendicular to the stacking direction (Z) and perpendicular to the connecting direction (Lc), and the second bipolar plate (B2) of the cell comprises a second pair of connecting housings (Tc) having openings aligned along a second transverse direction parallel to the first transverse direction, the connecting housings (Tc) of the second pair being located, along the stacking direction (Z), to the right of a zone of the first bipolar plate (B1) with no connecting housings (Tc).

11. Stack (1) according to any one of the preceding claims, wherein, each bipolar plate (B1 to B3) comprises two monopolar plates (M1, M2), called bipolar half-plates, comprising respectively two faces (F1, F2) rotated facing one another, and each connecting (Tc) and inactive (Ti) housing are delimited by the two faces (F1, F2).

12. Fuel cell, comprising a stack (1) according to any one of the preceding claims, a first distribution circuit (63) configured to distribute a first fluid to the first electrodes (6) of the cells (2 to 5) of the cell (60) and a second distribution circuit (64) configured to distribute a second fluid to the second electrodes (7) of the cells (2 to 5) of the cell (60).

13. Method for manufacturing a fuel cell stack (1), the method comprising a provision of a stack (1) comprising a plurality of cells (3, 4) disposed successively along a so-called stacking (1) direction (Z), each cell comprising:
- an assembly comprising two electrodes (6, 7) and a membrane (8) forming an electrolyte, the membrane being placed between the two electrodes; and
- two bipolar plates (B1-B3) enclosing the assembly, each bipolar plate of a cell also acting as a bipolar plate for another cell adjacent to the cell;
the method comprising a first formation, for each bipolar plate of at least one cell, of at least one housing (Tc), called connecting housing, configured to receive an electric connector intended to measure an electric parameter of the cell;
- each connecting housing (Tc) extending mainly along a so-called connecting direction (Lc), contained in a plane (X, Y) perpendicular to the stacking direction (Z);
- each connecting housing (Tc) having a mouth (ETc) forming an opening having a maximum direction Dc taken projecting into a so-called transverse plane (X, Z), perpendicular to the connecting direction (Lc);
**characterised in that** the method comprises, for each bipolar plate of said at least one cell, a second formation of at least one so-called inactive housing (Ti), having a mouth forming an opening having a maximum dimension Di, taken projecting into the transverse plane (X, Z), such that Dc is strictly greater than Di, and **in that** the stack (1) is configured such that, for a first bipolar plate of said at least one cell, the mouth (ETi) of an inactive housing (Ti) of the first bipolar plate:
- is located opposite, along a direction parallel to the stacking direction (Z), of the mouth of an inactive housing (Ti) of the second bipolar plate of said at least one cell; and
- masks at least one part of the mouth of the inactive housing (Ti) of the second bipolar plate along a projection into the transverse plane (X, Z).

14. Method according to the preceding claim, comprising a formation, for each bipolar plate of at least one cell, of at least two connecting housings (Tc), each connecting housing (Tc) comprising a longitudinal portion (PI) and a guiding portion (Pg) flaring from the longitudinal portion in the direction of the mouth (ETc), a development of the inactive housings (Ti) comprising, a cutout for each bipolar plate, and for only some of the connecting housings (Tc), of a portion of the connecting housing (Tc), so as to remove at least some of the guiding portion, and during the cutting, the guiding portion of the other connecting housings (Tc) being preserved.

15. Method according to the preceding claim, wherein the formation, for each bipolar plate of at least one cell, said at least two connecting housings (Tc) is performed using one same stamping tool.
